# EUROPEAN PATENT APPLICATION

(11) **EP 2 246 772 A2**
(43) Date of publication of application: **03.11.2010**
(21) Application number: 10160861.0
(22) Date of filing: 23.04.2010
(51) Int. Cl.: G06F 3/039, G06F 3/033

(54) **Mouse pad with touch panel pointing device**

(30) Priority: 27.04.2009 CN 200920055438 U
(71) Applicant: Xiang,, Mr. Zhi Gang, Ching Xi Town Guangdon Yu Lian Wei Village (CN)
(72) Inventor: Xiang,, Mr. Zhi Gang, Ching Xi Town Guangdon Yu Lian Wei Village (CN)
(74) Representative: Baldwin, Mark

(57) **Abstract**

A mouse pad with touch panel pointing device comprises a mouse pad with a protective casing for fixing a touch panel pointing device at the frontal end of the pad. A support mean is fixed at the back end of the pad. The combined function of a mouse pad and a touch panel pointing device provides the convenience of purchasing one single unit as oppose to two distinct products. Furthermore, by incorporating a support meant allows the user longer period of the use and relieve user from sore wrist and other common symptoms arise from long period of operating a typical computer mouse or pointing device.

## Description

### Technical Field

This invention relates to mouse pads and computer peripherals, more particularly, to a combination of a mouse pad and a point and click apparatus.

### Prior Art

Mouse pads are accessories that provide a suitable substrate for operation of a computer mouse or similar pointing device. Common mouse pads come in a flat pad of various shape. Generally without any meant of support; which, under long period of use leads to sore arms of the use. On the other hand, common computer mouse or pointing devices come in either mechanical or optical. They are generally large in shape, for which, is inconvenience in term of storing with the mouse pad. In addition, people find it troublesome as those who purchases computer mouse or pointing device may also need to purchase a mouse pad.

Most of the current laptop computers come with a touch panel that functions as computer mouse or pointing device. As described in U.S. Patent No. 7,696,987, touch panels generally come in two types: digitizers and analog resistive touch screens. Both of these types of touch panels all include a conductive tensioned membrane defining a touch surface. When a user touches the tensioned membrane, the tensioned membrane deflects and contacts the conductive substrate thereby to make an electrical contact. Determining voltage changes induced by the electrical contact allows the position of pointer contact on the touch surface to be determined and a position signal corresponding to the position of pointer contact to be generated. Because touch panel can be modulated in small size, it is applied to various other electronic devices. However, none have found in mouse pad.

### Brief Summary of the Invention

In one aspect of the present invention, is a mouse pad with a touch panel point and click apparatus that functions as a mouse pad and a computer mouse or pointing device while also provides a support meant for the comfort of the user.

Accordingly, in one preferred embodiment of the present invention, there is provided a mouse pad with a touch panel pointing device comprising:
a mouse pad, and a touch panel pointing device, whereas, the touch panel pointing device is fixed onto mouse pad.

In another preferred embodiment of the present invention, whereas, the touch panel pointing device is disposed at the frontal end of the mouse pad and at the back end of the mouse there disposed a support meant;

In another preferred embodiment of the present invention, whereas, the mouse pad comprises a casing for accommodating the touch panel pointing device; and

In another preferred embodiment of the present invention, whereas the touch panel pointing device supports multiple input functions.

The preferred embodiment of a mouse pad with a touch panel pointing device provides the advantages in that:
1. by combining the mouse pad and touch panel pointing device purchaser will only need to make one purchase of a single product and enjoys the functions of two distinct products;
2. the support meant provides wrist support for the user that relieve the user from sore arm and other common symptoms from operating a computer mouse or pointing device, and at the same time provide comfort for longer period of use;
3. the present embodiment of the touch panel pointing device is especially designed to work with Window 7 operating system. Furthermore, when editing pictures, user of the invention can expand, move and rotate pictures with much easier and faster operation. As previously, user will have to select expand, move and rotate function from the tool bar menu, these functions are directed incorporated into the touch panel pointing device; and
4. the multiple input function of the touch panel pointing device further supports handwriting function, which the user can use fingers or with a stylus to write or draw directly on the touch panel pointing device.

### Brief Description of the Drawings

Fig. 1 is a perspective view of the preferred embodiment of a mouse pad with a touch panel pointing device;
Fig. 2 is a perspective view of another preferred embodiment of a mouse pad with a touch panel pointing device;
Fig. 3 is a perspective view of another preferred embodiment of a mouse pad with a touch panel pointing device;
Fig. 4 is a perspective view of another preferred embodiment of a mouse pad with a touch panel pointing device;

### Detailed Description of the Illustrated Embodiment

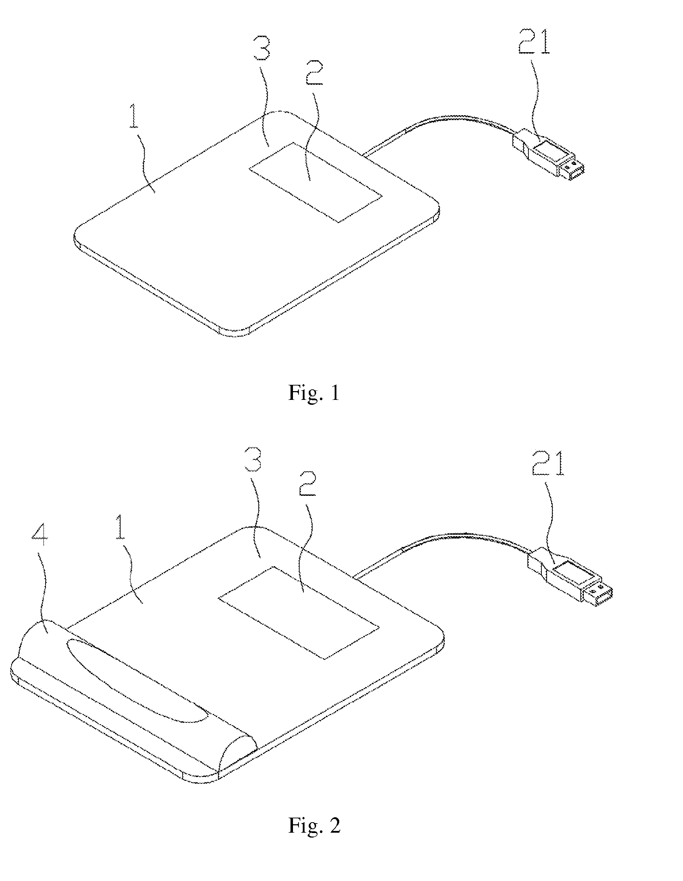

Please see Fig. 1 for a preferred embodiment of a mouse Pad with touch panel pointing device which comprising a mouse pad 1, a touch panel point device 2, whereas, the touch panel pointing device 2 is fixed onto the mouse pad 1. The touch panel pointing device 2 in this embodiment supports multiple input function.

Please see Fig. 2 for another preferred embodiment of a mouse pad with touch panel pointing device, whereas, the touch panel pointing device 2 is disposed at the frontal end of the mouse pad 1 and at the back end of the mouse pad 1 there disposed a support meant 4.

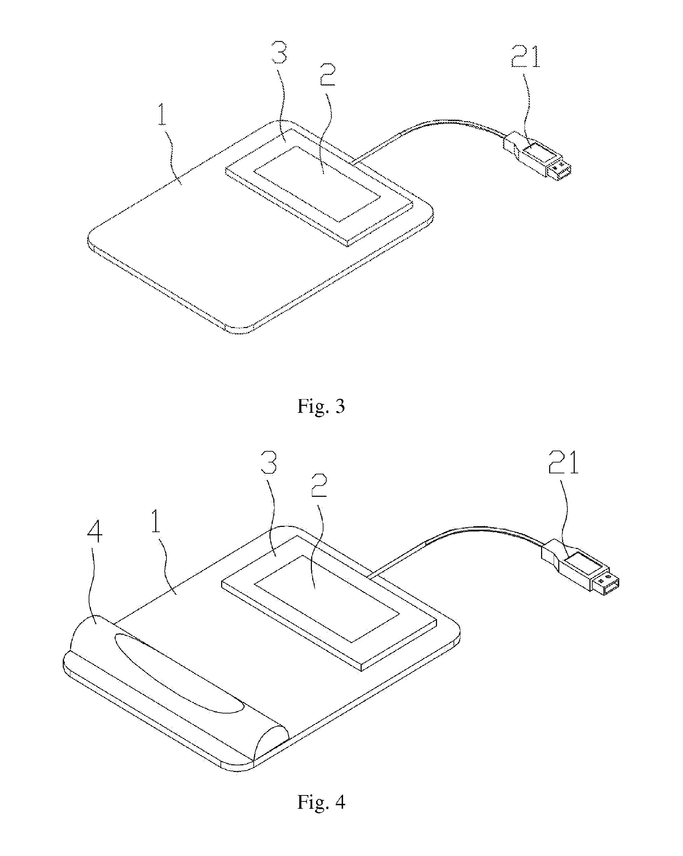

Please see Fig. 3 for another preferred embodiment of a mouse pad with touch panel pointing device, whereas, the mouse pad 1 comprises of a protective case 3 for accommodating the touch panel pointing device 2.

Please see Fig. 4 for yet another preferred embodiment of a mouse pad with touch panel pointing device, whereas, the mouse pad 1 comprises a protective casing 3 with the touch panel pointing device 2 disposed inside of it and a support meant 4 disposed at the back end of the mouse pad 1.

When operating the device, simply plug the USB connector 21 of the mouse pad 1 into the computer USB bus.

The above description for the invention is only the preferred embodiment. It is specially noted that any modification based on the same technical approach and design concept in the invention shall fall into the scope of the invention.

## Claims

1. A mouse pad with a touch panel pointing device comprising a mouse pad (1), a touch panel pointing device (2); it is characterized that said touch panel pointing device (2) is fixed into the said mouse pad (1).

2. The mouse pad with touch panel pointing device as claimed in claim 1, wherein said touch panel pointing device (2) is disposed at the frontal end of the said mouse pad (1); and a support meant (4) is disposed at the back end of the said mouse pad (1).

3. The mouse pad with touch panel pointing device as claimed in claim 1, wherein said mouse pad (1) further comprises a protective casing (3); wherein said touch panel pointing device (2) is installed into the said protective casing (3).

4. The mouse pad with touch panel pointing device as claimed in claim 3, wherein said mouse pad (1) further comprises a support meant (4) disposed at the back end of the said mouse pad (1).

5. The mouse pad with a touch panel pointing device as claimed in claim 3, wherein said touch panel pointing device (2) includes multiple input function.
